# EUROPÄISCHE PATENTSCHRIFT

(11) **EP 0 638 866 B1**
(45) Veröffentlichungstag und Bekanntmachung des Hinweises auf die Patenterteilung: **27.10.1999**
(21) Anmeldenummer: 93112976.1
(22) Anmeldetag: 13.08.1993
(51) Int. Cl.: G06F 12/14

(54) **Verfahren und Vorrichtung zum Verschlüsseln und Entschlüsseln von Information**
Method and apparatus to encrypt and decrypt information
Méthode et dispositif de chiffrement et déchiffrement de données

(43) Veröffentlichungstag der Anmeldung: 15.02.1995
(73) Patentinhaber: Utimaco Safeware AG, 61440 Oberursel (DE)
(72) Erfinder: Madsen, Karsten, DK-6823 Ansager (DK)
(74) Vertreter: Freiherr von Gravenreuth, Günter, Dipl.-Ing. (FH)

(56) Entgegenhaltungen:
- EP-A- 0 171 456
- ELECTRONIC ENGINEERING,, Bd.53, Nr.655, August 1981, LONDON, GB; Seiten 43 - 49 D.MACMILLAN 'Data Protection in the AMZ8000 Family'

## Beschreibung

Die Erfindung betrifft ein Verfahren gemäß dem Oberbegriff des Verfahrensanspruchs 1 und eine Vorrichtung gemäß dem Oberbegriff des Vorrichtungsanspruchs 3.

Bei bekannten Vorrichtungen ist die kryptographische Einheit an den Datenbus des Prozessors angeschlossen. Um die über eine Eingabeeinheit erhaltene Information verschlüsselt in einem Massenspeicher (z. B. Tape, Diskette, Festplatte oder WORM) ablegen zu können übergibt der Prozessor in einem ersten Schritt die unverschlüsselten Daten an die kryptographische Einheit, welche die Daten verschlüsselt. In einem zweiten Schritt liest der Prozessor die verschlüsselten Daten aus der kryptographischen Einheit und speichert die verschlüsselten Daten intern. In einem dritten Schritt übergibt der Prozessor die verschlüsselten Daten an einen Massenspeicher.

Gegenüber einem üblichen Speichern von unverschlüsselter Information sind zwei zusätzliche Schritte notwendig. Diese Schritte beinhalten jeweils einen Schreib/Lesevorgang. Ferner muß zwischen dem ersten und zweiten Schritt ein ausreichend großer Zeitraum liegen, da die kryptographische Einheit eine gewisse Zeit zum Verschlüsseln benötigt.

Beim Entschlüsseln liest der Prozessor in einem ersten Schritt die verschlüsselte Information aus dem Massenspeicher und speichert diese Information intern zwischen. In einem zweiten Schritt wird die verschlüsselte Information an die kryptographische Einheit übergeben. Nach der Entschlüsselung wird in einem drittenSchritt die entschlüsselte Information vom Prozessor aus der kryptographischen Einheit ausgelesen.

Gegenüber einem üblichen Lesen von unverschlüsselter Information sind ebenfalls wieder zwei zusätzliche Schritte notwendig.

Es ist daher Aufgabe der Erfindung, ein Verfahren und eine Vorrichtung zur Durchführung des Verfahrens zu schaffen, womit die Nachteile des Standes der Technik überwunden werden können und insbesondere eine schnelle Verschlüsselung und Entschlüsselung erreicht wird.

Erfindungsgemäß wird diese Aufgabe gelöst durch die im kennzeichnenden Teil des Verfahrensanspruchs 1 und des Vorrichtungsanspruchs 3 angegebenen Merkmale. Der erste Teil der ünabhängigen Ansprüche ist aus EP-A-0 171 456 bekannt.

Die in den Unteransprüchen angegebenen Merkmale kennzeichnen besondere Ausführungsformen bzw. Ausgestaltungen der Erfindung.

Nachfolgend wird die Erfindung anhand der Zeichnungen und der Bezugszeichenliste näher erläutert.

Es zeigen die
- Fig.1a- 1d: den Stand der Technik in den einzelnen Phasen des Verschlüsselungsvorgangs
- Fig. 2: die Erfindung beim Verschlüsselungsvorgang
- Fig. 3: die Erfindung beim Entschlüsselungsvorgang
Um die Vorzüge der vorliegenden Erfindung besser zu verdeutlichen wird vorab der Stand der Technik anhand der Figuren 1a bis 1d diskutiert. Aus Gründen der Übersichtlichkeit wurde die Darstellung auf Blockschaltbilder reduziert.

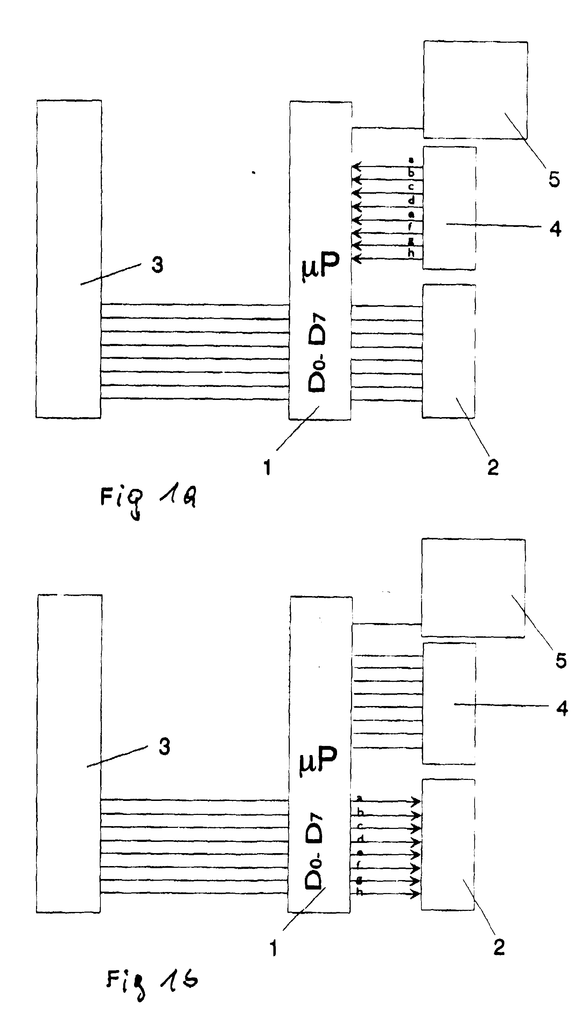

Die Figur 1a zeigt einen Micro Prozessor µP 1, eine kryptographische Einheit 2, einen Massenspeicher 3, eine Eingabeeinheit 4 und einen Monitor 5. Der Prozessor 1 ist mit dem Massenspeicher 3 über Leitungen (hier: Datenleitungen D0 bis D7) verbunden.

Über die Eingabeeinheit 4, welche zB eine Tastatur oder ein Lesegerät bzw. Scanner sein kann erhält der Prozessor 1 unverschlüsselte Daten. Diese Daten sind auf dem Monitor 5 zu Kontrollzwecken unverschlüsselt darstellbar. Dies erlaubt dem Anwender eine Überprüfung, ob die eingegebenen Daten richtig sind.

Der Prozessor 1 gibt die Daten an die kryptographische Einheit 2. Die kryptographische Einheit 2 ist in bekannter Weise mit dem Datenbus des Prozessors 1 verbunden.

In der kryptographische Einheit 2 werden die Daten nach einem an sich bekannten Algorithmus verschlüsselt. Um die verschlüsselten Daten im Massenspeicher 3 ablegen zu können ist es notwendig zuerst die verschlüsselten Daten aus der kryptographische Einheit 2 zu lesen und in einem weiteren Schritt im Massenspeicher 3 abzulegen.

Da die kryptographische Einheit 2 und der Massenspeicher 3 über den gleichen Datenbus am Prozessor 1 angeschlossen sind können die vorgenannten Schritte nur sequentiell ausgeführt werden. Es sind daher pro Speicherung drei Arbeitsschritte notwendig. Speziell bei größeren Datenmengen führt dies zu einer nicht unerheblichen Verringerung der Datenübertragungsrate.

Beim Auslesen von verschlüsselt abgespeicherten Daten aus dem Massenspeicher 3 und dem Entschlüsseln in der kryptographischen Einheit 2 sind im Prinzip die gleichen Schritte notwendig. Daher wird auf eine genaue Beschreibung verzichtet.

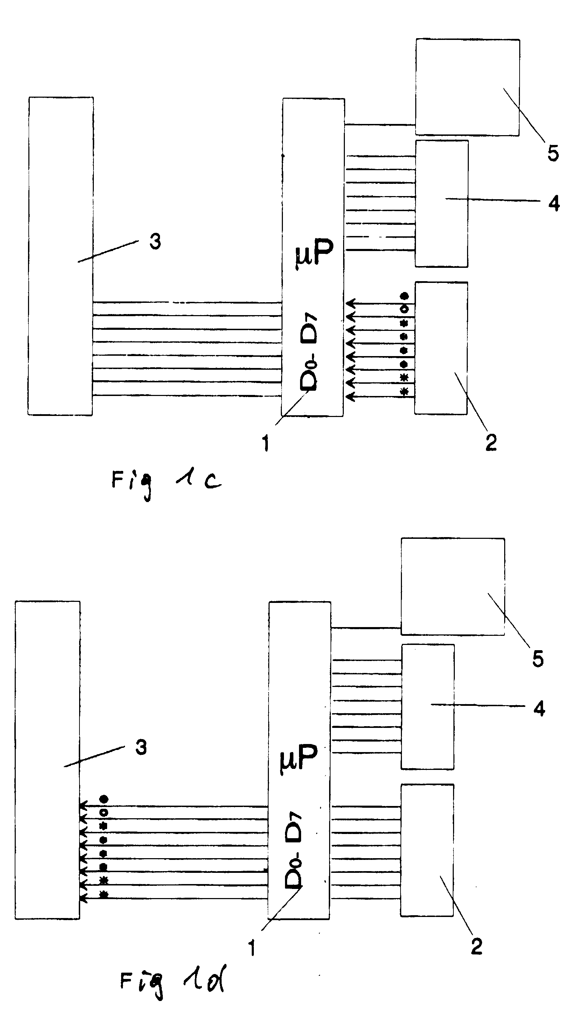

Das Blockschaltbild in Figur 2 zeigt eine mögliche Ausführungsform der Erfindung.

Über die Eingabeeinheit 4 gelangen die zu verschlüsselnden Daten in den Prozessor 1. Die kryptographische Einheit 2 ist nun zwischen die Datenleitungen D0-D7 welche vom Prozessor 1 zum Massenspeicher 3 führen eingeschleift.

Die kryptographische Einheit 2 besitzt bidirektionale Anschlüsse 6,7, wobei die Anschlüsse 6 mit dem Prozessor 1 und die Anschlüsse 7 mit dem Massenspeicher 3 verbunden sind. Zur Auswahl, ob die Anschlüsse 6,7 als Eingänge oder Ausgänge dienen sollen ist ein Schreib/Lese Eingang 8 vorhanden.

Beim Verschlüsseln und Abspeichern von Daten werden über den Schreib/Lese Eingang 8 die Anschlüsse 6 als Eingang und die Anschlüsse 7 als Ausgang definiert. Die an den Eingängen 6 vorhandenen Daten werden sofort innerhalb der kryptographische Einheit 2 verschlüsselt und in verschlüsselter Form an den Ausgängen 7 dem Massenspeicher zur Verfügung gestellt. Im Idealfall stehen damit die verschlüsselten Daten so schnell an den Ausgängen 7 zur Verfügung, daß dies innerhalb eines Taktseitraumes geschieht und der Prozessor keine Wartezyklen einfügen muß bis die Daten verschlüsselt sind. Je nach Komplexität des verwendeten Algorithmus kann dennoch ein längerer Zeitraum zum Verschlüsseln der Daten notwendig sein. Für diese Fälle ist an der kryptographische Einheit 2 ein Ausgang 9 vorgesehen, welcher mit dem Prozessor 1 verbunden ist und an diesen ein Signal abgibt, sobald die Verschlüsselung der am Eingang 6 anliegenden Daten abgeschlossen ist und die am Ausgang 7 vorhandenen Daten gültig sind. Der Prozessor 1 schickt erst nach Erhalt dieses Signals neue Daten an die kryptographische Einheit 2.So wird vorteilhaft vermieden, daß falsche oder nicht richtig verschlüsselte Daten abgespeichert werden.

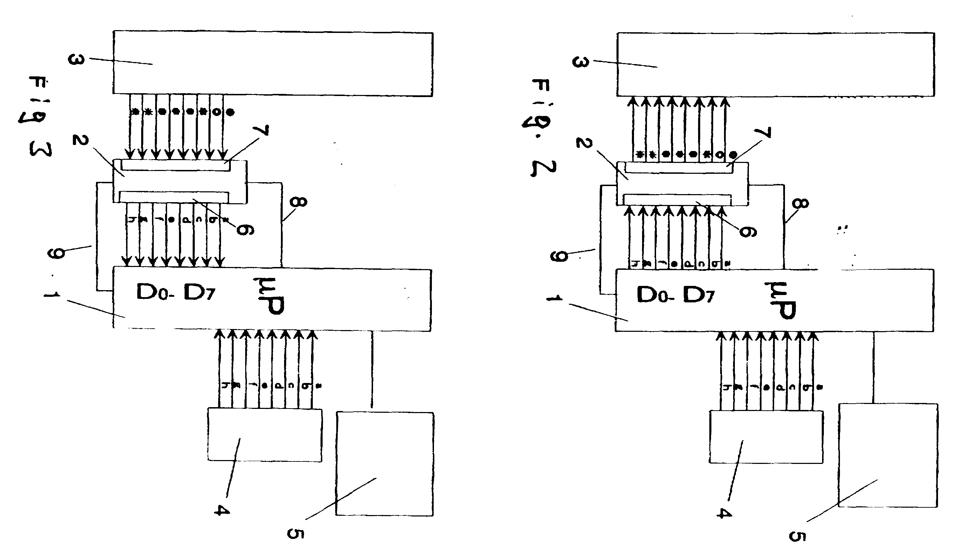

Figur 3 zeigt die aus Figur 2 schon bekannte Anordnung beim Auslesen von verschlüsselten Daten aus dem Massenspeicher 3 und deren Entschlüsselung in der kryptographische Einheit 2. Am - Schreib/Lese- Eingang liegt nun ein Signal an, durch welches die Anschlüsse 7 als Eingänge und die Anschlüsse 6 als Ausgänge definiert werden. Die im Massenspeicher verschlüsselt abgelegten Daten werden der kryptographische Einheit 2 über die Anschlüsse 7 zugeführt, werden dort entschlüsselt und an den Anschlüssen 6 dem Prozessor zur Verfügung gestellt. Auch hier liegt am Ausgang 9 ein Signal an, sobald die Daten an den Anschlüssen 6 gültig sind.

Die in verschlüsselter Form gespeicherten Daten können nach dem Entschlüsseln beispielsweise auf einem Monitor ausgegeben, überpruft und gegebenenfalls verändert werden.

Nach dem Verändern können die Daten natürlich wieder in verschlüsselter Form wie in Figur 2 gezeigt abgespeichert werden.

Das hier beschriebene Ausführungsbeispiel stellt nur eine von vielen Möglichkeiten zur Anwendung der Erfindung dar und soll keine Einschränkung auf einen festgelegten Anwendungsfall bedeuten. Grundsätzlich läßt sich die Erfindung überall dort einsetzen, wo einer schrellen Verschlüsselung und Entschlüsselung besondere Bedeutung zukommt.

## Patentansprüche

1. Verfahren zum Verschlüsseln und Entschlüsseln von Information, zum Speichern der verschlüsselten Information, zum Entschlüsseln der verschlüsselt gespeicherten Information, wobei
- ein Prozessor zur Verarbeitung von Daten verwendet wird,
- mittels einer mit dem Prozessor verbundenen Eingabeeinheit unverschlüsselte Informationen dem Prozessor zugeführt werden,
- in einem Speicher die verschlüsselte Information gespeichert wird,
- mit einer kryptographischen Einheit die Information verschlüsselt und entschlüsselt wird, wobei
- die kryptographische Einheit zwischen den Prozessor und den Speicher geschaltet wird
dadurch gekennzeichnet, daß
von der kryptographischen Einheit (2) ein Signal an den Prozessor (1) abgegeben wird, sobald die Information vollständig durch die kryptographische Einheit (2) verschlüsselt oder wieder entschlüsselt worden ist, wobei der Prozessor (1) erst nach Erhalt dieses Signals neue Daten an die kryptographische Einheit (2) schickt.

2. Verfahren nach Anspruch 1, dadurch gekennzeichnet, daß in Abhängigkeit von einem an der kryptographischen Einheit (2) anliegenden Signal durch die kryptographische Einheit (2) entweder die vom Prozessor (1) kommende Information verschlüsselt und an den Massenspeicher (3) verschlüsselt übergeben wird oder die im Massenspeicher (3) abgelegte Information von der kryptographischen Einheit 2 entschlüsselt und dem Prozessor (1) entschlüsselt übergeben wird.

3. Vorrichtung, zum Verschlüsseln und Entschlüsseln von Information, zum Speichern der verschlüsselten Information, zum Entschlüsseln der verschlüsselt gespeicherten Information mit
- einem Prozessor zur Verarbeitung von Information
- einer mit dem Prozessor verbundenen Eingabeeinheit, über welche die unverschlüsselte Information eingebbar ist,
- einer mit dem Prozessor verbundenen Ausgabeeinheit, auf welcher die Information in unverschlüsselter Form anzeigbar ist,
- einer kryptographischen Einheit, mit welcher die Information verschlüsselbar und wieder entschlüsselbar ist,
- einem Speicher in dem die verschlüsselte Information speicherbar ist und aus dem die Information wieder auslesbar ist,
- wobei die kryptographische Einheit zwischen dem Prozessor und dem Speicher angeordnet ist,
dadurch gekennzeichnet, daß die kryptographische Einheit (2) einen Ausgang (9) aufweist, über welchen nach vollständig erfolgter Verschlüsselung bzw Entschlüsselung ein Signal an den Prozessor abgebbar ist.

4. Vorrichtung nach Anspruch 3, dadurch gekennzeichnet, daß die kryptographische Einheit (2) bidirektionale Anschlüsse (6,7) und einen Schreib/Lese Eingang (8) aufweist, und die bidirektionalen Anschlüsse (6,7) in Abhängigkeit von einem an dem Schreib/Lese Eingang (8) anliegenden Signal als Eingang bzw. als Ausgang fungieren.

## Claims

1. Method of enciphering and deciphering information, for storing the enciphered information, for deciphering the information stored in enciphered form, wherein
- a processor is used for processing data,
- unenciphered information is supplied to the processor by means of an input unit connected to the processor,
- the enciphered information is stored in a memory,
- the information is enciphered and deciphered by a cryptographic unit, wherein
- the cryptographic unit is connected between the processor and the memory
characterised in that a signal is transmitted from the cryptographic unit (2) to the processor (1) as soon as the information has been completely enciphered or deciphered again by the cryptographic unit (2), the processor (1) sending new data to the cryptographic unit (2) only after receiving this signal.

2. Method according to claim 1, characterised in that, depending on a signal present at the cryptographic unit (2), either the information coming from the processor (1) is enciphered and transmitted to the mass memory (3) in enciphered form by the cryptographic unit (2) or the information filed in the mass memory (3) is deciphered by the cryptographic unit (2) and transmitted to the processor (1) in deciphered form.

3. Device for enciphering and deciphering information, for storing the enciphered information, for deciphering the information stored in enciphered form with
- a processor for processing information,
- an input unit which is connected to the processor and by means of which the unenciphered information can be input,
- an output unit which is connected to the processor and on which the information can be displayed in unenciphered form,
- a cryptographic unit with which the information can be enciphered and deciphered again,
- a memory in which the enciphered information can be stored and from which the information can be read out again, wherein
- the cryptographic unit is arranged between the processor and the memory,
characterised in that the cryptographic unit (2) comprises an output (9) by means of which a signal can be transmitted to the processor on completion of enciphering or deciphering.

4. Device according to claim 3, characterised in that the cryptographic unit (2) comprises bidirectional contacts (6, 7) and a read/write input (8), and the bidirectional contacts (6, 7) act as input or as output as a function of a signal present at the read/write input (8).

## Revendications

1. Procédé pour coder et décoder des informations, mémoriser des informations codées, décoder des informations mémorisées à l'état codé, selon lequel :
- un processeur est utilisé pour le traitement de données,
- des informations non codées sont envoyées au processeur au moyen d'une unité d'entrée reliée au processeur,
- les informations codées sont mémorisées dans une mémoire,
- les informations sont codées et décodées à l'aide d'une unité cryptographique,
- l'unité cryptographique étant branchée entre le processeur et la mémoire,
caractérisé en ce que
un signal est délivré au processeur (1) par l'unité cryptographique (2) dès que des informations ont été complètement codées ou à nouveau décodées par l'unité cryptographique (2), le processeur (1) envoyant de nouvelles données à l'unité cryptographique (2) uniquement après réception de ce signal.

2. Procédé selon la revendication 1, caractérisé en ce qu'en fonction d'un signal appliqué à l'unité cryptographique (2), l'unité cryptographique (2) soit code les informations arrivant du processeur (1) et les transmet à l'état codé a une mémoire de masse (3), soit les informations introduites dans la mémoire de masse (3) sont décodées par l'unité cryptographie (2) et transférées à l'état décodé au processeur (1).

3. Dispositif pour coder et décoder des informations, mémoriser les informations codées, décoder les informations mémorisées à l'état codé, comportant :
- un processeur pour traiter des informations,
- une unité d'entrée, qui est reliée au processeur et au moyen de laquelle les informations non codées peuvent être introduites,
- une unité de sortie, qui est reliée au processeur et sur laquelle les informations peuvent être affichées sous forme non codées,
- une unité cryptographique, avec laquelle les informations peuvent être codées et à nouveau décodées,
- une mémoire dans laquelle les informations codées peuvent être mémorisées et à partir de laquelle les informations peuvent être à nouveau lues,
- une unité cryptographique étant disposée entre le processeur et la mémoire,
caractérisé en ce que l'unité cryptographique (2) possède une sortie (9), au moyen de laquelle un signal peut être délivré au processeur après un codage ou un décodage complet.

4. Dispositif selon la revendication 3, caractérisé en ce que l'unité cryptographique (2) possède des bornes bidirectionnelles (6, 7) et une entrée d'écriture/lecture (8), et que les bornes bidirectionnelles (6, 7) agissent en tant qu'entrée ou sortie en fonction d'un signal appliqué à l'entrée d'écriture/lecture (8).
